# EUROPEAN PATENT APPLICATION

(11) **EP 2 083 438 A2**
(43) Date of publication of application: **29.07.2009**
(21) Application number: 09250172.5
(22) Date of filing: 22.01.2009
(51) Int. Cl.: H01J 17/49

(54) **Optical filter, method of manufacturing the same and plasma display device having the same**

(30) Priority: 22.01.2008 KR 20080006787
(71) Applicant: Samsung SDI Co., Ltd., Suwon-si, Gyeonggi-do (KR)
(72) Inventor: Do-Hyuk, Kwon, Gyeonggi-do (KR); Sung-Yong, Lee, Gyeonggi-do (KR); Cha-Won, Hwang, Gyeonggi-do (KR); Ji-Suk, Kim, Gyeonggi-do (KR); Sang-Mi, Lee, Gyeonggi-do (KR); Yong-Woo, Jung, Gyeonggi-do (KR); Jae-Young, Park, Gyeonggi-do (KR); Jang-Woo, Lee, Gyeonggi-do (KR); Jin-Young, Lee, Gyeonggi-do (KR); Chul-Ho, Park, Gyeonggi-do (KR); Chong-Gi, Hong, Gyeonggi-do (KR)
(74) Representative: Taor, Simon Edward William

(57) **Abstract**

An optical filter includes a support layer (11), absorption patterns (13) on a first surface of the support layer, the absorption patterns having a predetermined interval therebetween, and adhesion members (14) on the first surface of the support layer, the adhesion members being buried in the predetermined interval between the absorption patterns.

## Description

### BACKGROUND OF THE INVENTION

### 1. Field of the Invention

Example embodiments relate to an optical filter, a method of manufacturing the same, and a plasma display device having the same. More particularly, example embodiments relate to an optical filter having reduced thickness and high transmittance, a method of manufacturing the same and a plasma display device having the same.

### 2. Description of the Related Art

A plasma display device, which is a flat panel display device, may display images and text by a discharge phenomenon, i.e., by generating plasma discharge to excite phosphor to emit light. The plasma display device may have a large size and a reduced thickness, as compared, e.g., to a cathode ray tube (CRT) display device.

During the discharge phenomenon, the plasma display device may generate electromagnetic and near infrared radiation in a plasma display panel (PDP) due to high voltage. Emission of the electromagnetic and near infrared radiation from the PDP to an ambient environment, i.e., external surroundings of the plasma display device, may cause damage to a human body, trigger malfunction of electronic equipment, and distort image quality, e.g., near infrared light may decrease image quality by reducing color purity of emitted light. Accordingly, the PDP may require an optical filter.

A conventional optical filter may be mounted on a surface of the PDP, so emission of electromagnetic and near infrared radiation from the PDP to the ambient environment may be minimized. The conventional optical filter may include a plurality of stacked layers on a substrate. For example, the conventional optical filter may include an absorbent layer, a reflection preventing layer, and an electromagnetic wave shielding layer, with an adhesive layer between every two sequential layers.

However, since the conventional optical filter may include a plurality of stacked layers, i.e., a plurality of functional layers with adhesive layers therebetween, the weight and thickness of the conventional optical filter may be relatively large. Further, since the conventional optical filter may be spaced apart from the surface of PDP, e.g., an adhesive layer may be positioned between the filter and the PDP, duplicate images due to multiple reflections may be formed on an interface between the PDP and the optical filter, so that image quality of the PDP may be distorted. Also, reduction of external light reflection from the PDP may be limited in the conventional optical filter.

### SUMMARY OF THE INVENTION

Example embodiments are therefore directed to an optical filter, a method of manufacturing the same, and a plasma display device having the same, which substantially overcome one or more of the disadvantages of the related art.

It is therefore a feature of an example embodiment to provide an optical filter having reduced weight and thickness.

It is another feature of an example embodiment to provide an optical filter having improved control of light absorption rate.

It is yet another feature of an example embodiment to provide an optical filter exhibiting high transmittance and low reflectance of light.

It is still another feature of an example embodiment to provide an optical filter exhibiting minimized duplicate images.

It is yet another feature of an example embodiment to provide a method of manufacturing an optical filter having one or more of the above features.

It is still another feature of an example embodiment to provide a PDP with an optical filter having one or more of the above features.

At least one of the above and other features and advantages of the present invention may be realized by providing an optical filter, including a support layer, absorption patterns on a first surface of the support layer, the absorption patterns having a predetermined interval therebetween, and adhesion members on the first surface of the support layer, the adhesion members being buried in the predetermined interval between the absorption patterns.

The optical filter may further include adhesive patterns between the support layer and the absorption patterns. The optical filter may further include electromagnetic wave shielding patterns on the support layer with the predetermined interval therebetween, the electromagnetic wave shielding patterns being between the support layer and the absorption patterns. The support layer may exhibit transmittance of about 80% to about 90% and reflectance of about 1% to about 20%. The support layer may have a multi-layer structure, the layers in the multi-layer structure having different refractive indices. The absorption patterns may include one or more of an acrylic-based polymer, a polyester-based polymer, a polyurethane (PUR)-based polymer, a natural rubber (NR)-based polymer, a polybutadiene rubber (BR)-based polymer, a silicon-based polymer, a polyethersulphone (PES), a polyacrylate (PAR), a polyetherimide (PEI), a polyethylene naphthalate (PEN), a polyethyeleneterepthalate (PET), a polyphenylene sulfide (PPS), a polyallylate, a polyimide, a polycarbonate (PC), a tri-acetyl cellulose (TAC), and a cellulose acetate propinonate (CAP). The absorption patterns may include a black-based colorant. The absorption patterns may be arranged in a stripe pattern or a grid pattern. The adhesion members may include a colorant exhibiting selective light absorption.

The adhesion members may be only on side surfaces of the absorption patterns, the side surfaces of the absorption patterns being non-parallel to the first surface of the support layer. The adhesion members may be separated from each other via the absorption patterns, first surfaces of the adhesion members facing away from the support layer and being substantially coplanar. The adhesion members may be completely separated from each other, each adhesion member substantially filling a corresponding predetermined interval between adjacent absorption patterns. First surfaces of the adhesion members and first surfaces of the absorption patterns may face away from the support layer, the first surfaces of the adhesion members and absorption patterns being substantially coplanar.

At least one of the above and other features and advantages of the present invention may be realized by providing a method of manufacturing an optical filter, including forming absorption patterns on a first surface of a support layer, the absorption patterns having a predetermined interval therebetween, and forming adhesion members on the first surface of the support layer, the adhesion members being buried in the predetermined interval between the absorption patterns. The absorption patterns may be formed after an adhesive layer is formed on the first surface of the support layer. The forming of the absorption patterns may include providing an absorption layer on the adhesive layer. The method may further include sequentially forming an electromagnetic wave shielding layer and an absorption layer on the first surface of a support layer, patterning the absorption layer and electromagnetic wave shielding layer to form the absorption patterns and electromagnetic wave shielding patterns, portions of the first surface of the support layer being exposed between the absorption patterns and the electromagnetic wave shielding patterns, and depositing the adhesion members on the exposed portions of the first surface of the support layer, the adhesion members being in direct contact with the support layer and the absorption and electromagnetic wave shielding patterns.

At least one of the above and other features and advantages of the present invention may be realized by providing a plasma display device, including a plasma display panel, and an optical filter on the plasma display panel, the optical filter including a support layer, absorption patterns on a first surface of the support layer, the absorption patterns having a predetermined interval therebetween, and adhesion members on the first surface of the support layer, the adhesion members being buried in the predetermined interval between the absorption patterns. The absorption patterns may be between the support layer and the plasma display panel, the absorption patterns facing directly the plasma display panel. The absorption patterns may be in direct contact with the plasma display panel.

According to a first aspect of the invention there is provided an optical filter as set out in Claim 1. In some embodiments, the adhesion members are disposed in the predetermined interval between the absorption patterns so as to completely fill the predetermined interval. Preferred features of this aspect are set out in Claims 2-11.

According to a second aspect of the invention there is provided a method of manufacturing an optical filter as set out in Claim 12.

According to a third aspect of the invention, there is provided a plasma display device as set out in Claim 13. Preferred features of this aspect are set out in Claims 14 and 15.

### BRIEF DESCRIPTION OF THE DRAWINGS

The above and other features and advantages will become more apparent to those of ordinary skill in the art by describing in detail exemplary embodiments with reference to the attached drawings, in which:

FIG. 1 illustrates a perspective view of an optical filter according to an example embodiment;

FIG. 2 illustrates a perspective view of an optical filter according to another example embodiment;

FIGS. 3A to 3C illustrate cross-sectional views of sequential stages in a method of manufacturing an optical filter according to an example embodiment;

FIGS. 4A to 4C illustrate cross-sectional views of sequential stages in a method of manufacturing an optical filter according to another example embodiment; and

FIG. 5 illustrates a partially exploded perspective view of a plasma display device having an optical filter according to an example embodiment.

### DETAILED DESCRIPTION OF THE INVENTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey the scope of the invention to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

As used herein, the expressions "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C" and "A, B, and/or C" includes the following meanings: A alone; B alone; C alone; both A and B together; both A and C together; both B and C together; and all three of A, B, and C together. Further, these expressions are open-ended, unless expressly designated to the contrary by their combination with the term "consisting of." For example, the expression "at least one of A, B, and C" may also include an nth member, where n is greater than 3, whereas the expression "at least one selected from the group consisting of A, B, and C" does not.

As used herein, the terms "a" and "an" are open terms that may be used in conjunction with singular items or with plural items.

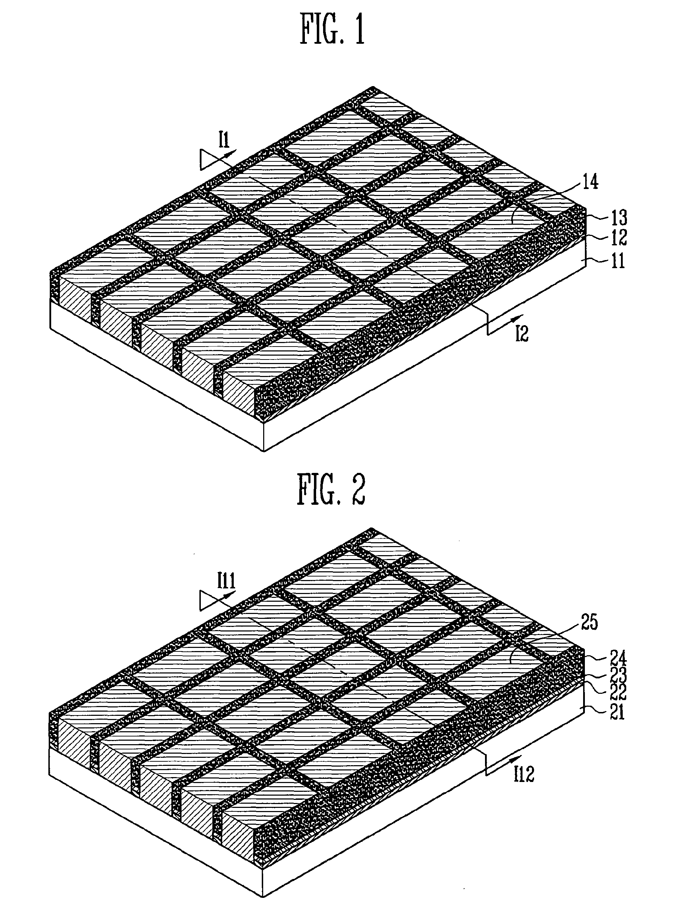

FIG. 1 illustrates a perspective view of an optical filter according to an example embodiment. As illustrated in FIG. 1, an optical filter may include a support layer 11, absorption patterns 13 disposed on one surface of the support layer 11 at predetermined intervals, and an adhesion member 14 buried between the absorption patterns 13. The optical filter may further include adhesive patterns 12 between the absorption patterns 13 and the support layer 11.

The support layer 11 may be used as a base layer of the optical filter, and may prevent reflection or glare. For example, the support layer 11 may have a high transmittance, e.g., about 80% to about 90%, and may have low haze, e.g., about 1% to about 5%, so loss of transmitted light may be minimized. The support layer 11 may have low reflectance, e.g., about 1% to about 20%, may exhibit heat resistance over its glass transition temperature, and may have a hardness of about 1H to about 3H, i.e., as determined by pencil hardness, so reflection of external light may be prevented or substantially minimized.

The absorption patterns 13 may be disposed on the support layer 11, as illustrated in FIG. 1, and may absorb transmitted light. For example, the absorption patterns 13 may include a black-based colorant, e.g., dye or pigment, to increase light absorption rate. The absorption patterns 13 may be spaced apart from each other on the support layer 11, and may be arranged in any suitable arrangement. For example, as illustrated in FIG. 1, the absorption patterns 13 may be arranged in a grid pattern, so portions of the support layer 11, e.g., square or rectangular portions, may be exposed between adjacent absorption patterns 13.

The adhesion members 14 may be disposed on the support layer 11 between the absorption patterns 13, as illustrated in FIG. 1. In other words, the adhesion members 14 may be arranged on the exposed portions, e.g., directly on the exposed portions, of the support layer 11 between adjacent absorption patterns 13. For example, as illustrated in FIG. 1, if the absorption patterns 13 are arranged in a grid pattern, the adhesion members 14 may be arranged in a matrix pattern, so each adhesion member 14 may be a discrete segment separated from an adjacent adhesion member 14, e.g., completely disconnected from each other, via an absorption pattern 13. For example, the adhesion members 14 may be only on side surfaces of the absorptions patterns 13, i.e., surfaces of the absorption patterns 13 not parallel to the support layer 11, so the adhesion members 14 may not overlap upper surfaces of the absorption patterns 13, i.e., surfaces of the absorption patterns 13 parallel to and facing away from the support layer 11. For example, the adhesion members 14 may completely overlap the exposed portions of the support layer 11, so each adhesion member 14 may be in direct contact with the support layer 11 and the side surfaces of the absorption patterns 13.

Upper surfaces of the adhesion members 14, i.e., surfaces facing away from the support layer 11, may be substantially coplanar to facilitate attachment of the optical filter to a desired surface via the adhesion members 14. For example, upper surfaces of the absorption patterns 13 and adhesion members 14 may be substantially coplanar, so if the absorption patterns 13 are directly on the support layer 11 (not shown), the absorption patterns 13 and the adhesion members 14 may have a substantially same thickness, i.e., as measured along a normal to the support layer 11. If adhesive patterns 12 are disposed between the absorption patterns 13 and the support layer 11, as illustrated in FIG. 1, the thickness of the adhesion members 14 may substantially equal a sum of the thicknesses of the absorption patterns 13 and the adhesive patterns 12.

The adhesion members 14 may be transparent. The adhesion members 14 may include a colorant, e.g., a dye or a pigment, having selective absorption for color correction, e.g., block neon light or near infrared rays. The adhesion members 14 may be formed of an adhesive material, so the adhesion members 14 may be attached to a display device, e.g., a surface of a PDP.

According to another example embodiment illustrated in FIG. 2, an optical filter may be substantially the same as the optical filter described previously with reference to FIG. 1, with the exception of having electromagnetic wave shielding patterns. More specifically, as illustrated in FIG. 2, the optical filter may include a support layer 21, electromagnetic wave shielding patterns 23 on the support layer 21 at predetermined intervals, absorption patterns 24 on the electromagnetic wave shielding patterns 23, and adhesion members 25 buried between the electromagnetic wave shielding patterns 23. The optical filter may further include an adhesive layer 22 between the electromagnetic wave shielding patterns 23 and the support layer 21.

The support layer 21, absorption patterns 24, adhesion members 25, and adhesive layer 22 may substantially correspond to the support layer 11, absorption patterns 13, adhesion members 14, and adhesive pattern 12, respectively, described previously with reference to FIG. 1 and, therefore, their detailed description will not be repeated. The electromagnetic wave shielding patterns 23 may have a substantially same shape as the absorption patterns 24, and may overlap, e.g., completely overlap, therewith. The electromagnetic wave shielding patterns 23 may be between the support layer 22 and the absorption patterns 24, so the adhesion members 25 may be in contact, e.g., in direct contact, with the support layer 21, absorption patterns 24, and electromagnetic wave shielding patterns 23.

The electromagnetic wave shielding pattern 23 may block electromagnetic waves, e.g., electromagnetic radiation emitted from a display device, and may be made of a transparent metal thin film having high electromagnetic wave shielding rate. For example, the electromagnetic wave shielding pattern 23 may be formed of one or more of platinum (Pt), silver (Ag), copper (Cu), aluminum (Al), nickel (Ni), molybdenum (Mo), or an alloy thereof. Accordingly, the optical filter may minimize emission of electromagnetic and near infrared radiation, while simultaneously reducing light reflection and improving color purity.

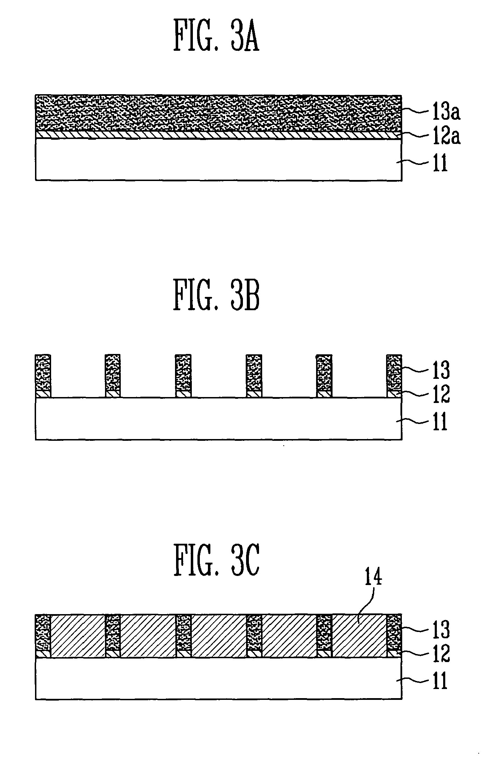

According to another example embodiment, an optical filter may be manufactured according to a method illustrated in FIGS. 3A-3C. FIGS. 3A-3C illustrate cross-sectional views along line I1-I2 in FIG. 1 of sequential stages in a method of manufacturing the optical filter of FIG. 1.

Referring to FIG. 3A, an absorption layer 13a may be formed on one surface of a support layer 11. For example, the absorption layer 13a may be formed directly on the support layer 11. In another example, as illustrated in FIG. 3A, the absorption layer 13a may be formed after an adhesive layer 12a is formed on the support layer 11, i.e., the adhesive layer 12a may be formed between the support layer 11 and the absorption layer 13a, so adhesion between the support layer 11 and the absorption layer 13a may be increased.

The support layer 11 may be a base layer of the optical filter, and may exhibit high transmittance for minimizing the loss of light. The support layer 11 may have low reflectance for preventing reflection of external light, and may exhibit predetermined heat resistance and hardness. For example, in order to have a low reflectance in a wide wavelength region, the support layer 11 may have a multi-layer structure including materials with different refractive indices. For example, the support layer 11 may include one or more of polyethyeleneterepthalate (PET), polysulphone (PS), polyethersulphone (PES), polystyrene, polyethylene, naphthalate, polyarylate, polyether ether ketone, polycarbonate (PC), polypropylene (PP), polyimide, tri-acetyl cellulose (TAC), and polymethylmethacrylate (PMMA).

The absorption layer 13a may be made of any suitable materials satisfying a dynamic and optical balance, high mechanical hardness, low thermal shrinkage, reduced generation of oligomers during heating, etc. For example, the absorption layer 13a may be made of one or more of a soft acrylic-based polymer, a polyester-based polymer, a polyurethane (PUR)-based polymer, a natural rubber (NR)-based polymer, a polybutadiene rubber (BR)-based polymer, a silicon-based polymer, etc. In another example, when supporting force is needed, the absorption layer 13a may be made of one or more of a hard polyethersulphone (PES), a polyacrylate (PAR), a polyetherimide (PEI), a polyethylene naphthalate (PEN), a polyethyeleneterepthalate (PET), a polyphenylene sulfide (PPS), a polyallylate, a polyimide, a polycarbonate (PC), a tri-acetyl cellulose (TAC), a cellulose acetate propinonate (CAP), etc.

The absorption layer 13a may have a high visible light absorption rate, i.e., over a wavelength range of about 400 nm to about 700 nm. For example, the absorption layer 13a may include a black-based colorant, e.g., a dye or a pigment. If a black-based colorant is included, the kind and density of the black-based colorant may be adjusted with respect to desired optical properties, e.g., absorption wavelength, absorption coefficient, transmission characteristic, etc.. For example, the absorption layer 13a may include about 2.5% by weight to about 5% by weight of solid carbon black. A particle size of the black-based colorant, e.g., of carbon black particles, may be on an order of nanometers (nm). The absorption rate of light by the absorption layer 13a may increase with respect to increase of content of the black-based colorant therein.

Referring to FIG. 3B, the absorption layer 13a may be patterned by a physical cutting method, e.g., a laser etching, to form the absorption patterns 13. The absorption patterns 13 may be arranged in any suitable shape to have a predetermined width and interval. For example, the absorption patterns 13 may be arranged in a stripe pattern, a grid pattern, etc. Cross-sections of the absorption patterns 13 may have any suitable shape, e.g., a quadrangle, a triangle, a lozenge, etc. If the adhesive layer 12a is formed between the absorption layer 13a and the support layer 11, the adhesive layer 12a may be patterned to form the adhesive patterns 12, as illustrated in FIG. 3B, so the adhesive patterns 12 and the absorption patterns 13 may completely overlap to expose a surface of the support layer 11.

Referring to FIG. 3C, the adhesion members 14 may be disposed on the exposed surface of the support layer 11 between the absorption patterns 13, so the adhesion members 14 may be buried between the absorption patterns 13. For example, the adhesion member 14 may be buried between the absorption patterns 13 by applying an adhesion material to the entire exposed surface of the support layer 11, e.g., to completely fill intervals between adjacent absorption patterns 13.

The adhesion members 14, which may include a transparent adhesion material or adhesive material, may be formed of one or more of a soft acrylic-based polymer, a polyester-based polymer, a PUR-based polymer, a NR-based polymer, a BR-based polymer, a silicon-based polymer, etc. The adhesion members 14 may have visible light transmittance of about 80% to about 95%, and may include a colorant, e.g., a dye or a pigment, having selective light absorption for color correction, e.g., to block neon light or near infrared rays. The kind and density of the colorant may be adjusted according to, e.g., absorption wavelength, absorption coefficient, transmission characteristics, etc., of light.

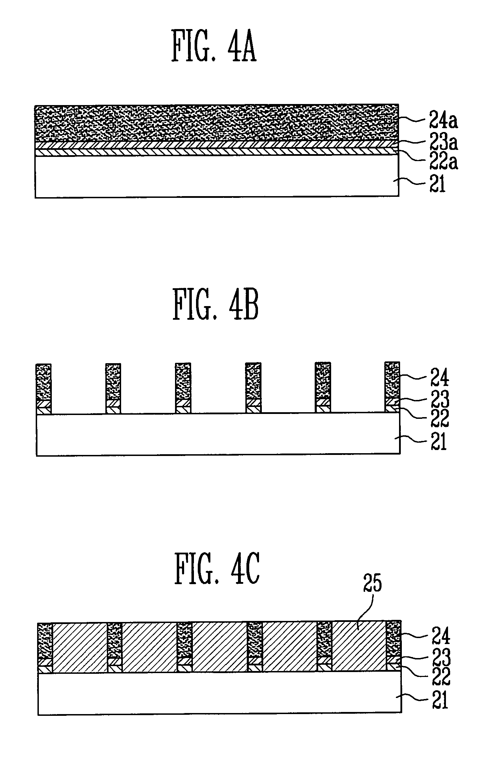

According to another example embodiment illustrated in FIGS. 4A-4C, a method of manufacturing an optical filter may be substantially the same as the method described previously with reference to FIGS. 3A-3C, with the exception of including formation of electromagnetic wave shielding patterns. FIGS. 4A-4C illustrate cross-sectional views along line I11-I12 in FIG. 2 of sequential stages in a method of manufacturing the optical filter of FIG. 2.

Referring to FIG. 4A, an electromagnetic wave shielding layer 23a and an absorption layer 24a may be sequentially formed on one surface of the support layer 21. In order to increase adhesion between the support layer 21 and the electromagnetic wave shielding layer 23a, the electromagnetic wave shielding layer 23a may be formed after an adhesive layer 22a is formed on the support layer 21. The support layer 21 and the absorption layer 24a may be made of the same materials as those of the support layer 11 and the absorption layer 13a of FIG. 3A, respectively. The electromagnetic wave shielding layer 23a may be made of a transparent metal thin film providing high electromagnetic wave shielding, e.g., one or more of platinum (Pt), silver (Ag), copper (Cu), aluminum (Al), nickel (Ni), molybdenum (Mo), or an alloy thereof. The electromagnetic wave shielding layer 23a may be made using, e.g., a sputtering method, a vacuum deposition method, an ion plating method, a chemical vapor deposition (CVD) method, a physical vapor deposition (PVD) method, etc.

Referring to FIG. 4B, the absorption layer 24a and electromagnetic wave shielding layer 23a may be patterned to form the absorption patterns 24 and electromagnetic wave shielding patterns 23, respectively, in a stacked structure. In other words, the absorption patterns 24 and electromagnetic wave shielding patterns 23 may have substantially same shapes, and may overlap each other, e.g., entirely overlap each other. The absorption patterns 24 may be disposed at a predetermined width and interval. The absorption layer 24 and electromagnetic wave shielding patterns 23 may be patterned using a physical cutting method, e.g., a laser etching, and the absorption patterns 24 and the electromagnetic wave shielding patterns 23 may be formed, e.g., in a stripe pattern, a grid pattern, etc. Portions of the adhesive layer 22 exposed between the absorption patters 24 and the electromagnetic wave shielding patterns 23 may be removed to expose the support layer 21.

Referring to FIG. 4C, adhesion members 25 may be buried between adjacent stacked structures of the absorption patterns 24 and the electromagnetic wave shielding patterns 23. The adhesion members 25 may be buried by applying the adhesion members 25 to the support layer 21 to contact side surfaces of the absorption patterns 24 and the electromagnetic wave shielding pattern 23. The adhesion member 25 may be made of the substantially same materials as those of the adhesion member 14 of FIG. 3C.

The optical filter according to example embodiments may control light absorption rate from both sides, i.e., absorption rate through a surface of the optical filter facing the PDP and an opposing surface of the optical filter, by adjusting a height of the absorption patterns 13 and 24, i.e., a distance measured along a normal to the respective support layers 11 and 21, relative to width thereof, i.e., a horizontal distance measured along a direction parallel to a line connecting two adjacent absorption patterns. For example, absorption rate of light incident on one surface of the optical filter may increase as a height of the absorption patterns 13 and 24 increases, and absorption rate of light incident on an opposing surface of the optical filter may increase as a width of the absorption patterns 13 and 24 increases. Therefore, adjustment of the optical filter to have a predetermined ratio between height/width of the absorption patterns may allow the absorption rate of light incident from the ambient environment, i.e., light external to the PDP, to be high, and may allow the absorption rate of light generated by the PDP, i.e., internal light to be emitted to form images, to be low. As such, a substantial portion of the external light incident on the PDP may be absorbed by the optical filter, while a substantial portion of the light generated inside the PDP may be transmitted through the optical filter to form images, so light room contrast of the PDP may be substantially improved. Further, since the optical filter according to example embodiments may include support layers 11 and 21 configured to prevent or substantially minimize light reflection therefrom, display properties of the PDP, e.g., visibility, may be further improved by exhibiting reduced light reflectance.

In addition, the optical filter according to example embodiments may be directly attached to a display panel, e.g., to a PDP, via the adhesion members 14 and 25. In other words, the adhesion members 14 and 25 may directly contact the respective absorption patterns 13 and 24 of the optical filter and the display panel, i.e., surfaces of the absorption patterns 13 and 24 contacting the respective adhesion members 14 and 25 and the display panel may be perpendicular to each other, to secure the absorption patterns 13 and 24 to the display panel. Since the adhesion members 14 and 25 may be separate members positioned only between respective absorption patterns 13 and 24, the absorption patterns 13 and 24 may directly face the display panel, e.g., may directly contact the display panel, without an additional interface layer between the absorption patterns and the display panel. Accordingly, duplicate images may be prevented, and an entire thickness of the optical filter may be substantially reduced as compared to the conventional optical filter. In contrast, when an adhesive layer is applied to an entire surface of a display panel, i.e., when the adhesive layer is between the display panel and the absorption patterns to define an interface layer therebetween, the interface layer, i.e., the adhesive layer, may form duplicate images due to refraction through the interface layer, and may increase an overall thickness of the filter, i.e., the conventional optical filter may include at least one additional layer.

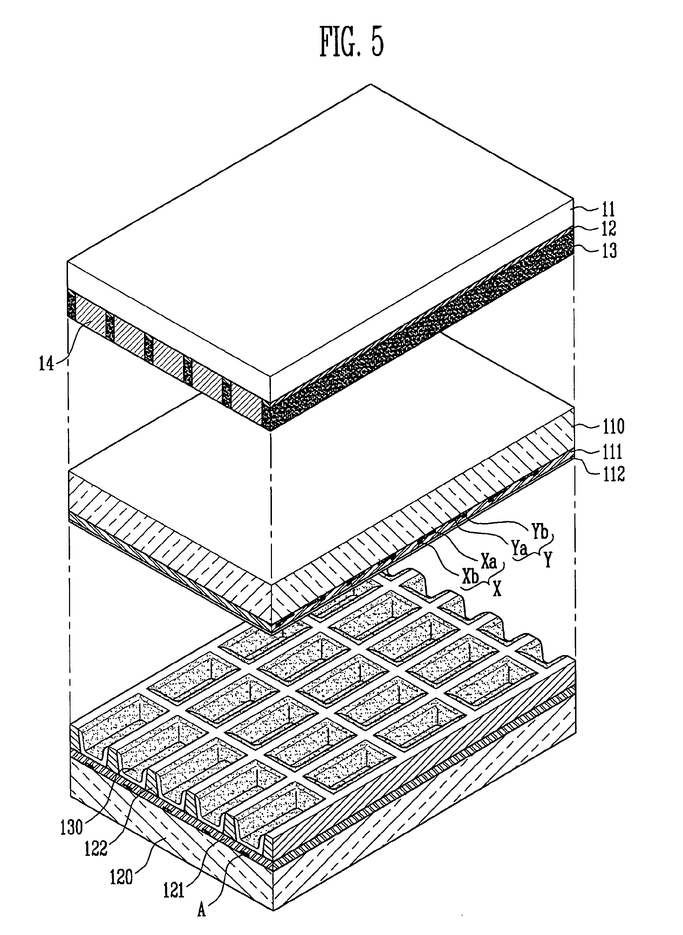

FIG. 5 illustrates a partially exploded perspective view of a PDP including the optical filter of FIG. 1. It is noted, however, that other configurations, e.g., a PDP with the optical filter of FIG. 2 or other types of display devices with any optical filter according to example embodiments, are within the scope of the presented invention. It is further noted that even though FIG. 5 illustrates a three-electrode surface emission type PDP, other types of PDPs are within the scope of the present invention.

Referring to FIG. 5, a PDP may include a first substrate 110 and a second substrate 120 disposed to be opposite to each other.

On the first substrate 110, a plurality of sustain electrode lines X and scan electrode lines Y covered with a dielectric 111 and a passivation film 112 may be formed to be parallel to each other. Each of the sustain electrode lines X and scan electrode lines Y may include respective transparent electrodes Xₐ and Yₐ made of, e.g., indium tin oxide (ITO), and respective metal electrodes X_{b} and Y_{b} for raising conductivity.

A plurality of address electrode lines A covered with a dielectric 121 may be formed on the second substrate 120. Barrier ribs 122 may be formed on the dielectric 121 to define discharge cells. The barrier ribs 122 may be between the address electrode lines A, and may include longitudinal portions parallel to the address electrode lines A. A phosphor layer 130 may be formed on surfaces of the barrier ribs 122 and the dielectric 121, i.e., inner surfaces of the discharge cells.

The first substrate 110 and the second substrate 120 may be bonded to each other, so the address electrodes lines A may face the sustain and scan electrode lines X and Y. Further, the address electrodes lines A may be perpendicular to the sustain and scan electrode lines X and Y, and gas for forming plasma may be sealed in the discharge cells, i.e., an airtight discharge spaces corresponding to a plurality of pixels.

An optical filter according to an example embodiment may be attached to the PDP. For example, the optical filter of FIG. 1 may be attached to the first substrate 110. As illustrated in FIG. 5, each of the absorption patterns 13 and adhesion patterns 14 may directly contact the first substrate 110, so external light may be incident on the support layer 11.

For example, the absorption patterns 13 of the optical filter may be formed to correspond to the barrier ribs 122, i.e., overlap with the barrier ribs 122, as illustrated in FIG. 5. In another example, the absorption patterns 13 of the optical filter may be formed to correspond to the metal electrodes X_{b} and Y_{b} of the PDP, i.e., overlap with the metal electrodes X_{b} and Y_{b}, or be formed asymmetrical thereto. When the absorption patterns 13 overlap the barrier ribs 122 or the metal electrodes X_{b} and Y_{b}, a luminance area may be maximized, thereby increasing luminance efficiency of the PDP. Also, if a reflective film (not shown) is formed on the surfaces of the absorption patterns 13, the reflective film may contact the first substrate 110, so absorption of light emitted from the PDP may be minimized, thereby improving luminance efficiency.

In the optical filter according to example embodiments, light absorption amount may be controlled by adjusting a proportion of height to width of the absorption patterns 13 and 24. Therefore, by controlling the height and width of the absorption patterns 13 and 24, the optical filter of the present invention may allow the light absorption rate incident from the external to be high and the light absorption rate emitted from the internal to be low, thereby improving light room contrast. Also, since the optical filter according to example embodiments includes support layers 11 and 21 that may be configured to prevent reflection, the filter may impart high visibility due to low reflectance. Further, since the optical filter may directly contact a display panel without an additional interface, formation of duplicate images may be prevented due to minimized refraction. Since the adhesion members 14 and 25 may be buried between the absorption patterns 13 and 24, an entire thickness of the optical filter according to example embodiments may be thinner as compared to the conventional optical filter, i.e., a filter of which an entire surface may be stacked with an adhesive layer.

With the optical filter according to an example embodiment, the absorption patterns may be disposed at a predetermined interval, so that a luminance area may be maximized. Since a stacked structure may be minimized to have an increased transmittance by about 70%, the optical filter according to example embodiments may be inexpensively manufactured to be light and thin. Also, the light absorption rate may be controlled by adjusting height to width ratios of the absorption patterns, so light room contrast and visibility may be improved, and duplicate images may be prevented.

Example embodiments of the present invention have been disclosed herein, and although specific terms are employed, they are used and are to be interpreted in a generic and descriptive sense only and not for purpose of limitation. Accordingly, it will be understood by those of ordinary skill in the art that various changes in form and details may be made without departing from the scope of the present invention as set forth in the following claims.

## Claims

1. An optical filter, comprising:
a support layer;
absorption patterns arranged on a first surface of the support layer, the absorption patterns having a predetermined interval therebetween along the first surface; and
adhesion members arranged on the first surface of the support layer, the adhesion members being disposed in the predetermined interval between the absorption patterns.

2. An optical filter according to claim 1, further comprising adhesive patterns disposed between the support layer and the absorption patterns.

3. An optical filter according to claim 1 or 2, further comprising electromagnetic wave shielding patterns arranged on the support layer, with the electromagnetic wave shielding patterns having the predetermined interval therebetween, wherein the electromagnetic wave shielding patterns are arranged between the support layer and the absorption patterns.

4. An optical filter according to any one of claims 1 to 3, wherein the support layer exhibits transmittance of about 80% to about 90% and reflectance of about 1% to about 20%.

5. An optical filter according to any one of claims 1 to 4, wherein the support layer has a multi-layer structure, with the layers in the multi-layer structure having different refractive indices.

6. An optical filter according to any one of claims 1 to 5, wherein the absorption patterns are arranged in a stripe pattern or a grid pattern.

7. An optical filter according to any one of claims 1 to 6, wherein the adhesion members include a colorant exhibiting selective light absorption.

8. An optical filter according to any one of claims 1 to 7, wherein the adhesion members only contact side surfaces of the absorption patterns, the side surfaces of the absorption patterns being non-parallel to the first surface of the support layer.

9. An optical filter according to any one of claims 1 to 8, wherein the adhesion members are separated from each other by the absorption patterns, wherein first surfaces of the adhesion members face away from the support layer and are substantially coplanar.

10. An optical filter according to claim 9, wherein the adhesion members are completely separated from each other, each adhesion member substantially filling a corresponding predetermined interval between adjacent absorption patterns.

11. An optical filter according to any one of claims 1 to 10, wherein first surfaces of the adhesion members and first surfaces of the absorption patterns face away from the support layer, the first surfaces of the adhesion members and the first surfaces of the absorption patterns being substantially coplanar.

12. A method of manufacturing an optical filter, comprising:
forming absorption patterns on a first surface of a support layer, the absorption patterns having a predetermined interval therebetween along the first surface; and
forming adhesion members on the first surface of the support layer, the adhesion members being disposed in the predetermined interval between the absorption patterns.

13. A plasma display device, comprising:
a plasma display panel; and
an optical filter according to any one of Claims 1 to 11.

14. A plasma display device according to claim 13, wherein the absorption patterns are arranged between the support layer and the plasma display panel, the absorption patterns being arranged to directly face the plasma display panel.

15. A plasma display device according to 13 or 14, wherein the absorption patterns are in direct contact with the plasma display panel.
